# EUROPÄISCHE PATENTSCHRIFT

(11) **EP 0 839 250 B1**
(45) Veröffentlichungstag und Bekanntmachung des Hinweises auf die Patenterteilung: **24.02.1999**
(21) Anmeldenummer: 97920520.0
(22) Anmeldetag: 14.03.1997
(51) Int. Cl.: E05F 15/00

(54) **SCHLIESSKANTEN-SICHERUNG**
CLOSING-EDGE-TYPE FUSE
FUSIBLE A ARETES DE FERMETURE

(30) Priorität: 04.04.1996 DE 19613436
(43) Veröffentlichungstag der Anmeldung: 06.05.1998
(73) Patentinhaber: Haake, André, D-46354 Südlohn (DE); Haake, Oliver, D-46354 Südlohn (DE); Haake, Patrick, D-46354 Südlohn (DE)
(72) Erfinder: Haake, André, D-46354 Südlohn (DE); Haake, Oliver, D-46354 Südlohn (DE); Haake, Patrick, D-46354 Südlohn (DE)
(74) Vertreter: Habbel, Hans-Georg, Dipl.-Ing.
(86) Internationale Anmeldenummer: DE9700535
(87) Internationale Veröffentlichungsnummer: WO9738199

(56) Entgegenhaltungen:
- EP-A- 0 103 726
- DE-C- 3 843 478

## Beschreibung

Die Erfindung bezieht sich auf eine Schließkanten-Sicherung gemäß dem Oberbegriff des Hauptanspruches.

Eine gattungsbildende Schließkantenanordnung wird in der EP 234 523 A1 beschrieben. Bei dieser bekannten Anordnung sind zwischen den Kontaktelementen Isolierkeilringe bzw. Isolierringkörper vorgesehen, die bewirken, daß schon bei einem minimalen Druck auf diese Isolierkörper eine Trennung der aus Isolierkörper und elektrisch leitender Kontaktstelle bestehenden Kontaktelemente eintritt und dadurch der Schaltvorgang ausgelöst wird. Die bekannte Anordnung ist sehr feinfühlig und hat sich daher im Betrieb ausgezeichnet bewährt, hat aber den Nachteil, daß sie in der Herstellung kostenaufwendig ist. Durch den Einsatz der Keilelemente zwischen den Kontaktelementen ist auch eine relativ große Bauausführung notwendig und das Vorsehen der Keilelemente beschränkt die geometrische Gestaltung der Schaltleiste, da bei scharfkantigen Ecken bereits ein Schaltvorgang ausgelöst werden könnte.

Aus der EP 01 03 726 A1 ist es bekannt, daß die Kontaktelemente als stromführende Bolzen mit abgerundeten Enden ausgebildet sind, die in einen isolierenden Kunststoff eingebettet sind, wobei die Bolzenenden über die Kunststoffkörper vorstehen. Die Kunststoffkörper sind in einem elastischen Schlauch angeordnet, in dem aber kein Kontaktelementenbett ausgearbeitet ist, sondern diese Kunststoffkörper können sich in dem Schlauch frei verschieben.

Der Erfindung liegt die Aufgabe zugrunde, die gattungsbildende Anordnung dadurch zu verbessern, daß sie kostengünstiger hergestellt werden kann, kleine Bauausführungen ermöglicht werden und jede beliebige geometrische Form mit der Schaltleiste abgedeckt werden kann.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird eine Schließkanten-Sicherung vorgeschlagen, die aus einer Kontaktkette und dem Aufnahmemedium besteht, z. B. einem Gummiprofil. Die Kontaktkette ist dabei so aufgebaut, daß sie aus kugelförmigen oder walzenförmigen Elementen besteht. Diese Elemente werden in dem Aufnahmemedium in einem in diesem ausgearbeiteten Bett gelagert, einem sogenannten Kontaktelementebett. Durch diese Gestaltung wird die bisher gesondert erforderliche Keilrolle oder der gesondert erforderliche Keilring vermieden, wobei dieses Kontaktelementebett das Kontaktelement nur halbseitig aufnehmen kann oder umschließen kann. Dieses Kontaktelementebett ist dabei elastisch ausgebildet und ist der kraftbeaufschlagten Seite zugewandt.

Hierbei ist es wie im Stand der Technik möglich, daß die einzelnen Kontaktelemente durch eine Expanderschnur oder gemäß der DE 29 17 797 A1 durch eine Draht-Federanordnung miteinander verbunden sind und dadurch vorgespannt werden.

Durch diese erfindungsgemäße Anordnung erfolgt die Schaltung dadurch, daß die Kugeln einerseits ortsfest in dem Kugelbett eingelagert sind und andererseits der Biegeradius in der Mittelachse der durch die Kontaktelemente gebildeten Kontaktkette größer ist als der Biegeradius des eigentlichen Kontaktelementebettes. Hierdurch ergeben sich unterschiedliche Wege, die zur Kontakttrennung führen. Weiterhin erfolgt aber auch bei dieser neuen Gestaltung die Schaltung wie bei der bisher bekannten Ausführung, d. h. durch die elastische Ausbildung des Kugel bettes werden bei Druckbeaufschlagung axiale Kraftkomponenten geschaffen, die sich in allen Richtungen verteilen.

Es ist ersichtlich, daß durch die erfindungsgemäße Anordnung eine sehr kleine Bauausführung erreicht wird und daß die Gestaltung der Schließkantensicherung kostengünstig erfolgen kann, weil die zusätzlich erforderlichen Bauelemente, nämlich die Keilrolle usw. entfallen. Kugeln sind eine Massenware, die im Preis günstig zu beschaffen sind, und es wird gleichzeitig eine sehr sensible Schaltung erreicht, da bereits kleinste Durchbiegungen zum Auslösen des Schaltvorganges genügen.

Ein sehr wesentlicher Vorteil der erfindungsgemäßen Anordnung ist weiterhin, daß mit diesem Aufbau jede beliebige geometrische Anordnung hergestellt werden kann, d. h . Schließkanten-Sicherungen mit engen Radien, Formteile, Fensterdichtungsprofile, Handschalter usw. Durch die einstellbare Vorspannung der Expanderschnur können Unebenheiten, Schwingungen usw. ausgeglichen werden.

Ausführungsbeispiele der Erfindung werden nachfolgend anhand der Zeichnungen erläutert. Die Zeichnungen zeigen dabei in
- Fig. 1: eine erste Ausführungsform ohne Expanderschnur, in
- Fig. 2: eine Anordnung zur Verdeutlichung des Schaltvorganges, in
- Fig. 3: eine Anordnung gemäß Fig. 1 aber mit Expanderschnur, in
- Fig. 4: die Anordnung eines rotationssymmetrischen Kontaktelementebettes, in
- Fig. 5: die Anordnung eines halbseitigen Kontaktelementebettes und in
- Fig. 6: eine Anordnung mit abgewandelten Kontaktelementen.

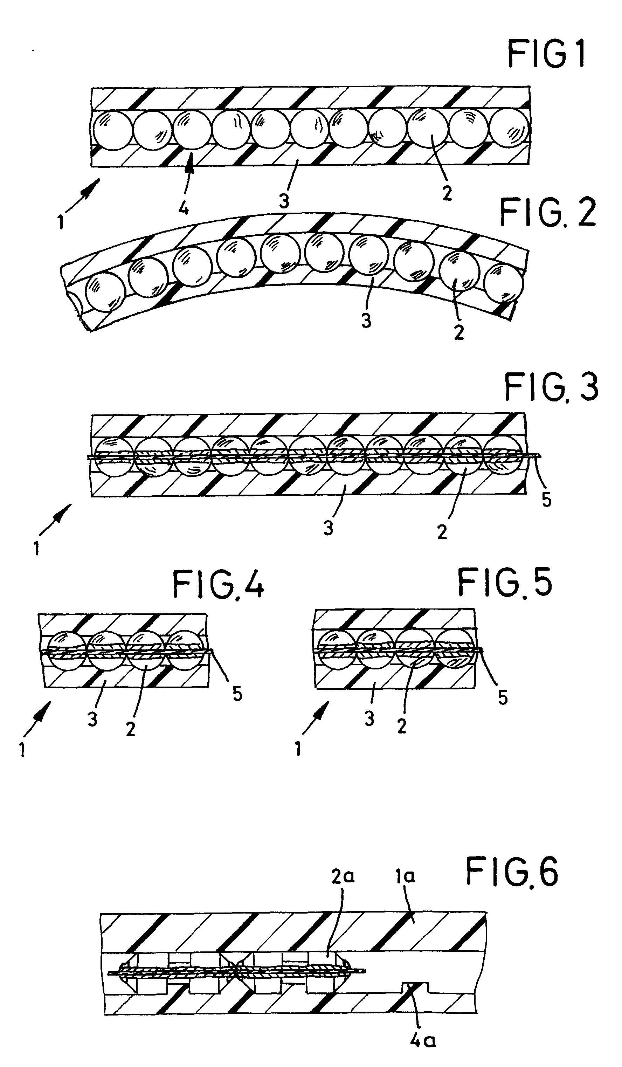

In den Zeichnungen ist mit 1 eine Sicherheitsleiste bezeichnet, die aus einem Schlauch 3 besteht, in dem Kontaktelemente 2 und 2a angeordnet sind, die bei den Ausführungen gemäß den Fig. 1 bis 5 als Kugeln und bei der Ausführungsform gemäß Fig. 6 als Walzen ausgebildet sind, die vorzugsweise halbkugelförmige Stirnseiten aufweisen.

Bei der Anordnung gemäß Fig. list erkennbar, daß die Kugeln 2 in Kontaktelementebetten liegen, die der Form der Kugel angepaßt sind und die beispielsweise bei der Herstellung des Schlauches erzeugt werden können. In gleicher Weise ist es aber auch möglich, den Schlauch auszuschäumen und dadurch die Kugeln in entsprechende Betten einzubetten. Wie die Fig. 4 und 5 zeigen, können die Betten die Kugel 2 rotationssymmetrisch umgeben, können aber auch nur an einer Seite des Schlauches ausgeformt sein. Wenn die Kontaktelementebetten nur an einer Seite des Schlauches vorgesehen sind, muß das Bett an der druckbeaufschlagten Seite des Schlauches ausgebildet sein.

Fig. 2 verdeutlicht, daß der Biegeradius in der Mittelachse des Schlauches durch die Mitte der Kontaktelemente 2 verlaufend größer ist als der Biegeradius des eigentlichen Bettes, so daß sich unterschiedliche Wege ergeben, die zur Kontakttrennung führen. Die Trennung erfolgt hier also nach dem Prinzip der Durchbiegung.

Die Trennung beruht aber weiterhin auch auf der Tatsache, daß die Kontaktelemente ortsfest in den Betten eingebunden sind und dadurch bei einer Biegung der Schaltleiste auseinandergezogen werden.

Fig. 3 zeigt die Anordnung gemäß Fig. 1 mit eingesetzter Expanderschnur 5, wodurch nunmehr die Kontaktelemente 2 aufeinander zugezogen werden, so daß dadurch Unebenheiten, Schwingungen usw. nicht zu einer Schaltung der Anordnung führen können.

Die Ausführung gemäß Fig. 6 zeigt, wie walzenförmige Kontaktelemente 2a mit ihren kugelförmigen Köpfen aneinanderliegen und dadurch fest in der Schaltleiste 1a eingebunden sind, daß die Kontaktelementebetten 4a durch Vorsprünge erreicht werden, die in entsprechende Ausnehmungen der walzenförmigen Kontaktelemente eingreifen. Auch bei dieser Ausführungsform kann mit oder ohne Expanderschnur gearbeitet werden.

## Patentansprüche

1. Schließkanten-Sicherung mit einer eine elektrische Schalteinrichtung aufweisenden Sicherheitsleiste (1), die aus einer Vielzahl von Kontaktelementen (2, 2a) besteht, die in einem elastischen Schlauch (3) aneinandergereiht angeordnet sind, wobei die Kontaktelemente (2, 2a) in Ruhestellung unter der Einwirkung einer elastischen Vorspannung an stirnseitig vorgesehenen Kontaktstellen aneinander anliegen und unter der Einwirkung einer äußeren Kraft bei Verformung des Schlauches (3) den Kontakt unterbrechend auseinanderbewegt werden, dadurch gekennzeichnet, daß in dem elastischen Schlauch (3) ein der Form der Kontaktelemente (2, 2a) angepaßtes, die Kontaktelemente jeweils einzeln aufnehmendes elastisches Kontaktelementebett (4, 4a) ausgearbeitet ist, das ortsfest in Bezug zum Schlauch (3) und an der kraftbeaufschlagten Seite des Schlauches (3) angeordnet ist, so daß die Kontaktelemente (2, 2a) einerseits ortsfest in dem Kontaktelementebett (4, 4a) gelagert sind und andererseits der Biegeradius in der Mittelachse der durch die Kontaktelemente (2, 2a) gebildeten Kontaktkette größer ist als der Biegeradius des eigentlichen Kontaktelementebettes (4, 4a).

2. Schließkanten-Sicherung nach Anspruch 1, dadurch gekennzeichnet, daß das Kontaktelementebett (4, 4a) nur halbseitig im Schlauch vorgesehen ist.

3. Schließkanten-Sicherung nach Anspruch 1, dadurch gekennzeichnet, daß das Kontaktelementebett (4, 4a) auf dem ganzen Innenumfang des Schlauches vorgesehen ist.

4. Schließkanten-Sicherung nach einem der vorhergehenden Ansprüche, dadurch gekennzeichnet, daß die Kontaktelemente (2, 2a) von einer Expanderschnur (5) durchzogen sind.

5. Schließkanten-Sicherung nach einem der vorhergehenden Ansprüche 1 bis 3, dadurch gekennzeichnet, daß die Kontaktelemente (2, 2a) von einer Draht-Federanordnung durchzogen sind.

6. Schließkanten-Sicherung nach einem der vorhergehenden Ansprüche, dadurch gekennzeichnet, daß die Kontaktelemente (2) als Kugeln ausgebildet sind.

7. Schließkanten-Sicherung nach einem der vorhergehenden Ansprüche 1 bis 5, dadurch gekennzeichnet, daß die Kontaktelemente (2a) walzenförmig ausgebildet sind und an ihren Stirnseiten halbkugelförmig gestaltet sind.

## Claims

1. A closing edge safety device comprising a safety strip (1) having an electric switching device, said safety strip (2) consisting of a plurality of contact elements (2, 2a) which are arranged in a row in a resilient tube (3), wherein, in the neutral position, the contact elements (2, 2a) rest against each other at contact points on their faces under the influence of resilient preloading and move apart from each other in a manner such as to break contact under the influence of an external force causing deformation of the tube (3), characterised in that a resilient contact element bed (4, 4a), providing individual accommodation for each of the contact elements and conformed to the shape of the contact elements (2, 2a) is formed in the resilient tube (3), said contact element bed (4, 4a) being arranged fixedly with respect to the tube (3) and on the side of the tube (3) to which force is applied, such that on the one hand the contact elements (2, 2a) are mounted fixedly in the contact element bed (4, 4a) and on the other hand the bending radius in the central axis of the contact chain formed by the contact elements (2, 2a) is greater than the bending radius of the contact element bed (4, 4a) proper.

2. A closing edge safety device according to claim 1, characterised in that the contact element bed (4, 4a) is provided on only one side of the tube.

3. A closing edge safety device according to claim 1, characterised in that the contact element bed (4, 4a) is provided over the entire inner circumference of the tube.

4. A closing edge safety device according to any one of the preceding claims, characterised in that an expander cord (5) passes through the contact elements (2, 2a).

5. A closing edge safety device according to any one of preceding claims 1 to 3, characterised in that a wire/spring arrangement passes through the contact elements (2, 2a).

6. A closing edge safety device according to any one of the preceding claims, characterised in that the contact elements (2) take the form of balls.

7. A closing edge safety device according to any one of preceding claims 1 to 5, characterised in that the contact elements (2a) are cylindrical in form and have hemispherical ends.

## Revendications

1. Dispositif de sécurité à arêtes de fermeture ayant une barre de sécurité (1) comportant un dispositif électrique de coupure constitué d'une pluralité d'éléments de contact (2, 2a) qui sont disposés en file les uns à côté des autres dans un tuyau flexible élastique (3), les éléments de contact (2, 2a) étant appliqués, en position de repos, les uns contre les autres au niveau de points de contact prévus de manière frontale, sous l'effet d'une précontrainte élastique, et étant éloignés les uns des autres d'une manière qui interrompt le contact lors d'une déformation du tuyau flexible (3) sous l'effet d'une force extérieure, caractérisé en ce qu'un berceau élastique pour éléments de contact (4, 4a) qui loge les éléments de contact un par un et qui est adapté à la forme des éléments de contact (2, 2a) est façonné dans le tuyau flexible élastique (3) et est disposé à un endroit fixe par rapport au tuyau flexible (3), du côté du tuyau flexible (3) où s'applique la force, de manière que, d'une part, les éléments de contact (2, 2a) sont montés à des endroits fixes dans le berceau pour éléments de contact (4, 4a) et que, d'autre part, le rayon de courbure de l'axe médian de la chaîne de contacts constituée par les éléments de contact (2, 2a) est supérieur au rayon de courbure du berceau pour éléments de contact (4, 4a) proprement dit.

2. Dispositif de sécurité à arêtes de fermeture selon la revendication 1, caractérisé en ce que le berceau pour éléments de contact (4, 4a) n'est prévu à l'intérieur du tuyau flexible que d'un côté.

3. Dispositif de sécurité à arêtes de fermeture selon la revendication 1, caractérisé en ce que le berceau pour éléments de contact (4, 4a) est prévu sur la totalité de la surface intérieure du tuyau flexible.

4. Dispositif de sécurité à arêtes de fermeture selon l'une des revendications précédentes, caractérisé en ce qu'un cordon extensible (5) parcourt les éléments de contact (2, 2a)

5. Dispositif de sécurité à arêtes de fermeture selon l'une des revendications précédentes 1 à 3, caractérisé en ce qu'un dispositif filaire formant ressort parcourt les éléments de contact (2, 2a).

6. Dispositif de sécurité à arêtes de fermeture selon l'une des revendications précédentes, caractérisé en ce que les éléments de contact (2) sont réalisés sous forme de billes.

7. Dispositif de sécurité à arêtes de fermeture selon l'une des revendications précédentes 1 à 5, caractérisé en ce que les éléments de contact (2a) sont réalisés sous forme cylindrique et que leurs faces frontales sont hémisphériques.
